Europäisches Patentamt

European Patent Office

Office européen des brevets

(11) Veröffentlichungsnummer: **0 140 111**

**A2**

(12) EUROPÄISCHE PATENTANMELDUNG

(21) Anmeldenummer: **84111009.1**

(22) Anmeldetag: **14.09.84**

(51) Int. Cl.⁴: **H 04 Q 11/04**
**H 04 M 11/06**

(30) Priorität: **30.09.83 DE 3335627**

(43) Veröffentlichungstag der Anmeldung:
**08.05.85 Patentblatt 85/19**

(84) Benannte Vertragsstaaten:
**AT DE FR GB IT**

(71) Anmelder: **Siemens Aktiengesellschaft**
**Berlin und München Wittelsbacherplatz 2**
**D-8000 München 2(DE)**

(72) Erfinder: **Gefrörer, Stanislaus, Dipl.-Math.**
**Flurweg 34**
**D-8021 Taufkirchen(DE)**

(72) Erfinder: **Mattern, Karl, Dipl.-Math.**
**Wiesenthaustrasse 16**
**D-8000 München 60(DE)**

(72) Erfinder: **Schindler, Fred, Dipl.-Math.**
**Klenzestrasse 52**
**D-8000 München 5(DE)**

(54) **Verfahren für eine End-zu-End-Steuerung für die Mischkommunikation in intergrierten Mehrdienste-Digitalnetzen.**

(57) Ein Verfahren für eine End-zu-End-Steuerung für die Mischkommunikation in einem integrierten Mehrdienste-Digitalnetz ISDN (Integrated Services Digital Network), für das vorgesehen ist, daß die Abstimmung bezüglich der Kombination von Kommunikationsformen (KF) sowie ggf. deren Leistungsmerkmalen ausschließlich zwischen den Mischkommunikations-Partnerstationen, nämlich ohne Benutzung von Netzwerkeinrichtungen, durchgeführt wird und daß zur Einleitung einer Informationsübertragung von der initiirenden Teilnehmerstation aus eine die gewünschte Kommunikationsform (KF) oder die gewünschten Kommunikationsformen kennzeichnende Information (KI) zu der Partner-Teilnehmerstation vor dem Nutzinformationsaustausch übertragen wird, aufgrund welcher kennzeichnenden Information (KI) die Partner-Teilnehmerstation die für die gekennzeichnete Kommunikationsform oder die gekennzeichneten Kommunikationsformen (KF) erforderlichen Endeinrichtung oder erforderlichen Endeinrichtungen aktiviert und eine Quittungsinformation zu der initiierenden Teilnehmerstation überträgt.

SIEMENS AKTIENGESELLSCHAFT       Unser Zeichen
Berlin und München               VPA **83 P 1804 E**


Verfahren für eine End-zu-End-Steuerung für die Mischkommunikation in integrierten Mehrdienste-Digitalnetzen


Digitale Netze für Sprachübertragung sind wegen der digitalen Übertragungsweise prinzipiell gut dazu geeignet, neben
Sprache auch Information anderer Art wie Text, Faksimile
und Daten zu übertragen. Sie können zwischen zwei Netzteilnehmern eine Verbindung für die gleichzeitige Übertragung
von Information in beiden Richtungen herstellen, wobei die
Information digital und vom Netz transparent übertragen
wird (Duplex-Verbindung für Übertragung). Solch eine Verbindung kann permanent oder temporär (Stand- bzw. Wählverbindung) oder auch als festdefinierte, aber nur temporär genutzte Verbindung (Direktruf) bestehen.

Neben der Funktion der transparenten Übertragung wird vorausgesetzt, daß vom Netz ein netzweiter Takt für ein und
eventuell für mehrere Oktetts geliefert wird. Außerdem ist
vom Netz für den wichtigen Fall der Wählverbindung die Funktion der Verbindungssteuerung (Auf- und Abbau und gegebenenfalls Überwachung der Verbindung) zu erbringen.

Als Übertragungsrate der Verbindung werden je Richtung beispielsweise 64 kbit/s angenommen, womit die Übertragung
PCM-codierter Sprache möglich ist.

Die genannten Netzfunktionen werden bei dem (von CEPT und
CCITT) geplanten Integrierten Mehrdienste-Digitalnetz ISDN
(Integrated Services Digital Network) entweder gegeben, bei
Verbindungsaufbau einstellbar oder zumindest technisch realisierbar sein.


Pap

Neben den Möglichkeiten, mittels eines digitalen Netzes die Verbindung herzustellen, besteht auch die prinzipielle Möglichkeit, zwei "Teilnehmer" direkt zu koppeln.

Unter den genannten Randbedingungen soll gemäß der Aufgabe für die vorliegende Erfindung das Problem der Mischkommunikation gelöst werden. Unter Mischkommunikation wird allgemein die zeitlich alternierende oder parallele Nutzung mehrerer Kommunikationsformen wie Sprach-, Text-, Faksimile- und Datenkommunikation verstanden. Im vorliegenden Fall soll sich Mischkommunikation (MK) auf zwei, im Sinne der MK kommunizierende Teilnehmer und darauf, daß nur eine Verbindung mit den besagten Eigenschaften zur Verfügung steht, beschränken.

Die Aufgabe für die vorliegende Erfindung wird durch ein Verfahren für eine End-zu-End-Steuerung für die Mischkommunikation gemäß dem Oberbegriff des Patentanspruchs 1 gelöst, das durch die in dem kennzeichnenden Teil des Patentanspruchs 1 angegebenen Merkmale charakterisiert ist.

Vorteilhafte Weiterbildungen der Erfindung sind durch die in den Unteransprüchen angegebenen Merkmale gekennzeichnet.

Mit der vorliegenden Erfindung wird ein Verfahren für eine End-zu-End-Steuerung vorgeschlagen, das unabhängig davon anwendbar ist, ob die Steuerinformation im Nutzkanal (in slot) oder außerhalb des Nutzkanals (out slot) übertragen wird. Es ist ferner unabhängig von der einzelnen Kommunikationsform und erlaubt die Steuerung beliebiger Varianten für Mischkommunikation.

Eine vorteilhafte Weiterbildung der Erfindung sieht vor, daß bei blockweiser Übermittlung der anteilige Übertragungsweg nur dann beansprucht wird, wenn tatsächlich Information zu übermitteln ist.

Im folgenden wird die Erfindung anhand einer Figur im einzelnen erläutert.

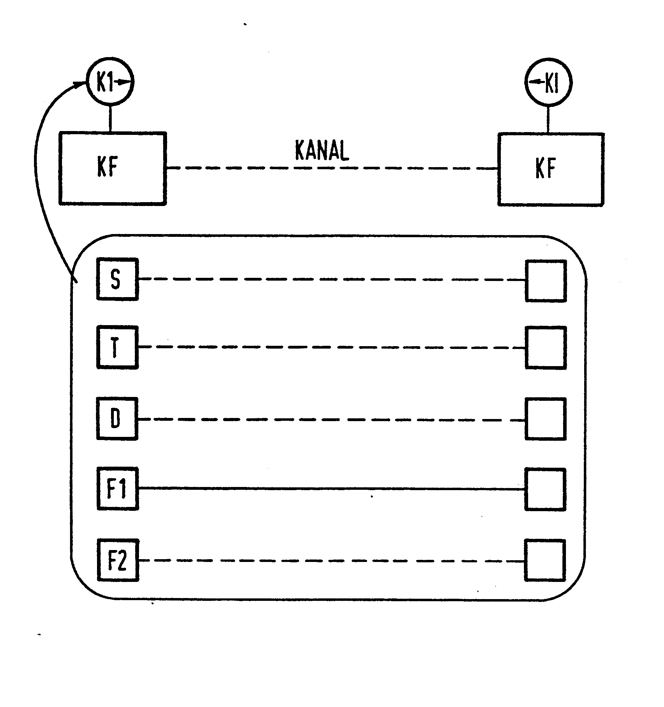

Die Figur zeigt schematisch die Zusammenhänge zwischen der kennzeichnenden Information KI mit den verschiedenen Kommunikationsformen KF, nämlich "Sprache" S, "Text" T, "Daten" D und unterschiedliche Formen für "Faksimile" F1, F2 sowie die Konfiguration zweier Teilnehmerstationen, die über einen realen oder virtuellen Kanal miteinander verbunden sind.

Die Abstimmung bezüglich der Kombination von Kommunikationsformen KF sowie ggf. deren Leistungsmerkmalen erfolgt gemäß der vorliegenden Erfindung ausschließlich zwischen den Mischkommunikations-Partnerstationen, nämlich ohne Benutzung von Netzwerkeinrichtungen. Zur Einleitung einer Informationsübertragung wird von der initiierenden Teilnehmerstation aus eine die gewünschte Kommunikationsform KF oder die gewünschten Kommunikationsformen kennzeichnende Information KI zu der Partner-Teilnehmerstation vor dem Nutzinformationsaustausch übertragen. Aufgrund dieser kennzeichnenden Information KI aktiviert die Partner-Teilnehmerstation die für die gekennzeichnete Kommunikationsform oder die gekennzeichneten Kommunikationsformen KF erforderlichen Endeinrichtungen. Außerdem überträgt sie eine Quittungsinformation zu der initiierenden Teilnehmerstation.

Die kennzeichnende Information KI wird entweder über den betreffenden Nutzkanal (in slot) oder über einen Hilfskanal (out slot) übertragen, wobei der Hilfskanal ein spezieller Signalisierungskanal oder ein weiterer, ansonsten freier Nutzkanal ist. Die die gewünschte Kommunikationsform KF betreffende kennzeichnende Information KI ist sowohl unmittelbar nach dem Verbindungsaufbau als auch während einer bestehenden Verbindung austauschbar, d. h. sie kann auch bedarfsabhängig, insbesondere innerhalb einer festgelegten Kombination von Kommunikationsformen KF, und hiermit auch lastabhängig geändert werden, womit die Leistungsmerkmale der vereinbarten Kommunikationsform KF veränderbar sind.

Die kennzeichnende Information KI enthält eine richtungsspezifische Festlegung für eine gewünschte Kommunikationsform oder gewünschte Kommunikationsformen, wodurch eine erste Übertragungsrichtung für beispielsweise die Kommunikationsform "Sprache" und Quittierung einer Textübermittlung sowie eine zweite Übertragungsrichtung für beispielsweise die Kommunikationsform "Text" festgelegt werden. Für bestimmte Kommunikationsformen ist eine sog. blockorientierte Übertragungsweise vorgesehen. Eine derartige blockorientierte Übertragung wird jeweils bedarfsweise eingeleitet. Die betreffenden Blöcke oder Blockgruppen sind durch eine Präambel und durch eine Postambel eingeschlossen.

Die kennzeichnende Information KI ist an einer vorgegebenen Stelle in dem betreffenden Block oder der betreffenden Blockgruppe enthalten.

Es können mehrere Kommunikationsformen alternierend je Übertragungsrichtung verwendet werden. Die zu dem damit verbundenen Betriebsmodus gehörende Teilinformation ist innerhalb der kennzeichnenden Information KI enthalten. Es können auch mehrere Kommunikationsformen simultan je Übertragungsrichtung verwendet werden. Eine entsprechende Teilinformation für den damit verbundenen Betriebsmodus ist ebenfalls in der kennzeichnenden Information KI enthalten.

11 Patentansprüche

1 Figur

Patentansprüche:

1. Verfahren für eine End-zu-End-Steuerung für die Mischkommunikation in einem integrierten Mehrdienste-Digitalnetz ISDN (Integrated Services Digital Network), dadurch g e - k e n n z e i c h n e t , daß die Abstimmung bezüglich der Kombination von Kommunikationsformen (KF) sowie ggf. deren Leistungsmerkmalen ausschließlich zwischen den Mischkommunikations-Partnerstationen, nämlich ohne Benutzung von Netzwerkeinrichtungen, durchgeführt wird und daß zur Einleitung einer Informationsübertragung von der initiirenden Teilnehmerstation aus eine die gewünschte Kommunikationsform (KF) oder die gewünschten Kommunikationsformen kennzeichnende Information (KI) zu der Partner-Teilnehmerstation vor dem Nutzinformationsaustausch übertragen wird, aufgrund welcher kennzeichnenden Information (KI) die Partner-Teilnehmerstation die für die gekennzeichnete Kommunikationsform oder die gekennzeichneten Kommunikationsformen (KF) erforderlichen Endeinrichtung oder erforderlichen Endeinrichtungen aktiviert und eine Quittungsinformation zu der initiierenden Teilnehmerstation überträgt.

2. Verfahren nach Anspruch 1, dadurch g e k e n n - z e i c h n e t , daß die kennzeichnende Information (KI) über den betreffenden Nutzkanal (in slot) übertragen wird.

3. Verfahren nach Anspruch 1, dadurch g e k e n n - z e i c h n e t , daß die kennzeichnende Information (KI) über einen Hilfskanal (out slot) übertragen wird.

4. Verfahren nach Anspruch 3, dadurch g e k e n n - z e i c h n e t , daß der Hilfskanal ein spezieller Signalisierungskanal ist.

5. Verfahren nach Anspruch 3, dadurch g e k e n n - z e i c h n e t , daß der Hilfskanal ein weiterer, ansonsten freier Nutzkanal ist.

6. Verfahren nach einem der Ansprüche 1 ... 5, dadurch g e k e n n z e i c h n e t , daß die die gewünschte Kommunikationsform (KF) betreffende kennzeichnende Information (KI) sowohl unmittelbar nach dem Verbindungsaufbau als auch während einer bestehenden Verbindung austauschbar ist, d. h. sie kann auch bedarfsabhängig, insbesondere innerhalb einer festgelegten Kombination von Kommunikationsformen (KF), und hiermit auch lastabhängig geändert werden, womit die Leistungsmerkmale der vereinbarten Kommunikationsform (KF) veränderbar sind.

7. Verfahren nach Anspruch 1, dadurch g e k e n n - z e i c h n e t , daß die kennzeichnende Information (KI) eine richtungsspezifische Festlegung für eine gewünschte Kommunikationsform oder gewünschte Kommunikationsformen enthält, wodurch eine erste Übertragungsrichtung für beispielsweise die Kommunikationsform "Sprache" und Quittierung einer Textübermittlung sowie eine zweite Übertragungsrichtung für beispielsweise die Kommunikationsform "Text" festgelegt werden.

8. Verfahren nach Anspruch 1, dadurch g e k e n n - z e i c h n e t , daß für bestimmte Kommunikationsformen eine sog. blockorientierte Übertragungsweise vorgesehen ist, daß eine derartige blockorientierte Übertragung jeweils bedarfsweise eingeleitet wird und daß die betreffenden Blöcke oder Blockgruppen durch eine Präambel und durch eine Postambel eingeschlossen sind.

9. Verfahren nach Anspruch 8, dadurch g e k e n n - z e i c h n e t , daß die kennzeichnende Information (KI) an vorgegebener Stelle in dem betreffenden Block oder der betreffenden Blockgruppe enthalten ist.

10. Verfahren nach Anspruch 1, dadurch g e k e n n - z e i c h n e t , daß mehrere Kommunikationsformen je Übertragungsrichtung alternierend verwendet werden und daß zu dem damit verbundenen Betriebsmodus innerhalb der kennzeichnenden Information (KI) eine entsprechende Teilinformation
enthalten ist.

11. Verfahren nach Anspruch 1, dadurch g e k e n n -
z e i c h n e t , daß mehrere Kommunikationsformen je Übertragungsrichtung simultan verwendet werden und daß zu dem
damit verbundenen Betriebsmodus innerhalb der kennzeichnenden Information (KI) eine entsprechende Teilinformation
enthalten ist.